# FASCICULE DE BREVET EUROPEEN

(11) **EP 0 497 688 B1**
(45) Date de publication et mention de la délivrance du brevet: **21.08.1996**
(21) Numéro de dépôt: 92400221.5
(22) Date de dépôt: 29.01.1992
(51) Int. Cl.: B60J 3/02

(54) **Pare-soleil recouvert d'un revêtement et muni d'un bras de support**
Sonnenblende mit Überzug und mit Halterungstange
Upholstered sun visor with mounting bracket

(30) Priorité: 31.01.1991 FR 9101118
(43) Date de publication de la demande: 05.08.1992
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Prillard, Charles B., F-88360 Rupt sur Moselle (FR)
(74) Mandataire: Hasenrader, Hubert

(56) Documents cités:
- EP-A- 0 230 269
- DE-A- 3 008 361

## Description

La présente invention concerne un pare-soleil pour véhicule automobile du type comportant un écran présentant une encoche sur l'un de ses bords, un bras de support traversant ladite encoche et un revêtement recouvrant ledit écran, ledit bras de support étant fixé audit écran par des moyens de fixation et étant destiné à coopérer temporairement avec un moyen d'accrochage fixé au pavillon du véhicule sur lequel ledit pare-soleil est monté, les parties de revêtement situées au voisinage immédiat des extrémités du bras de support étant interposées entre les faces d'extrémité dudit bras de support et ledit écran.

Le pare-soleil est solidarisé, da manière connue, au pavillon du véhicule par une patte coudée permettant son pivotement, d'une part, autour d'un axe latéral sensiblement vertical et, d'autre part, autour d'un axe horizontal. Afin de mieux positionner le pare-soleil dans le véhicule, il est nécessaire de le clipser sur un crochet fixé en partie centrale du pavillon. Pour ce faire, le pare-soleil est muni d'un bras de support, ou d'un embout, susceptible de coopérer avec ledit crochet de telle manière qu'il puisse pivoter autour dudit bras de support.

On rencontre des difficultés pour monter le bras de support lorsque le pare-soleil est recouvert d'un revêtement notamment en matière plastique. Le revêtement est généralement réalisé en soudant les bords de deux feuilles de revêtement disposées de part et d'autre de l'écran, le long du pourtour de l'écran.

Selon un procédé de fabrication connu, le bras de support est constitué par un axe solidaire de l'écran qui est recouvert de matière plastique, lors de la phase de recouvrement de l'écran. L'axe peut avoir une section adaptée pour compenser l'épaisseur de la soudure et éviter que son revêtement se déplace lors du pivotement du pare-soleil. Toutefois, ce mode de réalisation ne permet pas de maîtriser le diamètre du bras de support et la coopération avec le crochet du pavillon peut entraîner à la longue une déchirure du revêtement de l'axe.

Pour y remédier, il a été proposé d'enlever la partie du revêtement qui entoure l'axe en pratiquant des découpes circulaires près des bords de l'encoche. Mais ces découpes restent visibles, et elles sont inesthétiques en particulier lorsque l'habillage n'est pas réalisé dans un matériau homogène.

Il a également été proposé de réaliser le bras de support à l'aide de deux demi-coquilles que l'on monte sur une tige solidaire de l'écran après l'habillage de celui-ci par le revêtement.

DE-A-3 008 361 montre un bras de support de ce type, selon le préambule de la revendication 1.

EP-A-0 230 269 concerne un pare-soleil comportant un bras de support en une seule pièce qui s'étend à travers une encoche. Ce bras de support comporte à chaque extrémité un alésage borgne qui loge une extrémité de tige. Les extrémités du bras de support sont ancrées dans l'écran. Ce document ne fournit aucune indication sur la disposition des parties de revêtement au voisinage du bras de support.

On connaît également un procédé de montage du bras de support qui permet de ne pas laisser apparaître les découpes du revêtement au voisinage des extrémités du bras de support. Ce procédé consiste à repousser les parties de revêtement entourant les découpes dans l'écran du pare-soleil. Mais la réalisation du bras de support est plus délicate, car les découpes doivent être cachées des deux côtés de l'encoche. La technique utilisée actuellement consiste à fixer le bras support sur une pièce complémentaire que l'on enfile d'un côté de l'encoche dans un logement prévu à cet effet pour pousser le revêtement dans le pare-soleil et que l'on renfile de l'autre côté, dans l'autre sens, pour cacher la deuxième découpe. L'inconvénient de cette technique est qu'elle nécessite un outillage coûteux et un temps de mise en place important. Il faut en effet tordre le pare-soleil pour permettre le clipsage de la pièce complémentaire dans la cavité prévue à cet effet. De plus, ce mode de construction ne permet pas de réaliser des écrans minces.

Le but de la présente invention est de proposer un pare-soleil du type mentionné dont le montage du bras de support est simple, qui permet l'utilisation d'un écran mince, et qui présente un aspect esthétique.

Le but de la présente invention est atteint par le fait que ledit écran présente deux portions d'extrémité de tige s'étendant en vis-à-vis dans ladite encoche et coaxialement audit bras de support, par le fait que ledit bras de support se présente sous la forme d'un tube, et par le fait que les moyens de fixation dudit bras de support sur ledit écran sont constitués pas lesdites portions d'extrémités de tige coopérant avec les logements ménagés dans ledit bras de support et débouchant sur les faces d'extrémité de celui-ci.

L'invention ressortiront à la lecture de la description suivante faite à titre d'exemple et en référence au dessin annexe dans lequel :

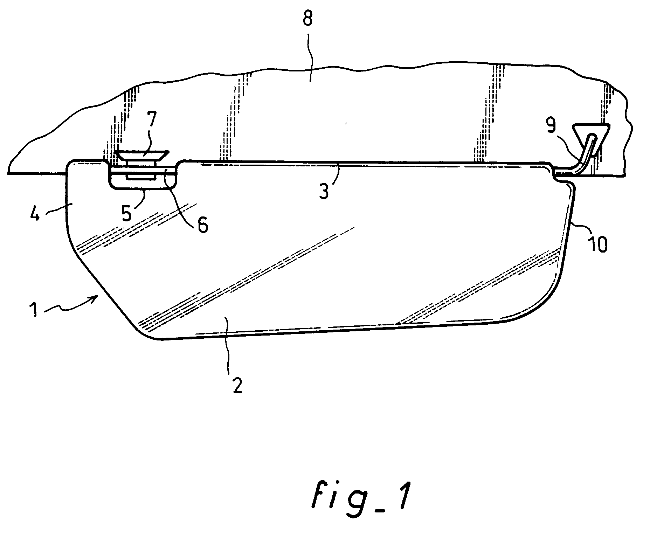

la figure 1 montre un pare-soleil fixé au pavillon d'un véhicule automobile,

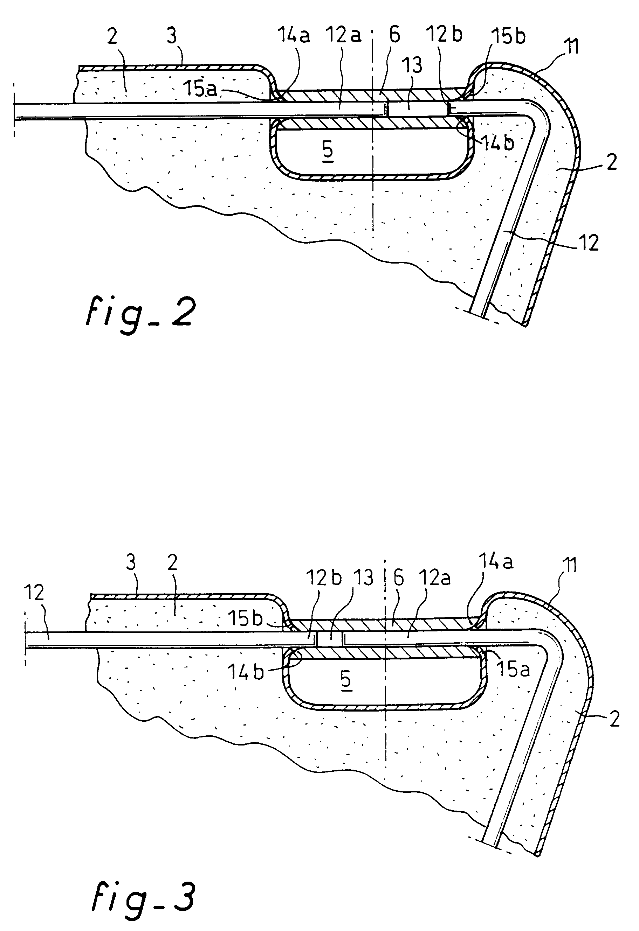

la figure 2 montre une coupe médiane de la partie du pare-soleil au voisinage du bras de support,
la figure 3 montre une variante de réalisation de la figure 2, et
les figures 4 à 6 représentent les différentes phases de réalisation du pare-soleil selon l'invention.

Le dessin montre un pare-soleil pour véhicule automobile comportant un écran 2 qui présente sur l'un de ses bords longitudinaux 3 et au voisinage de l'une de ses extrémités 4, une encoche 5 dans laquelle est disposé un bras de support 6 sensiblement parallèle au bord longitudinal 3 destiné à coopérer avec un crochet 7 solidaire du pavillon 8 du véhicule.

Le pare-soleil 1 est solidarisé au pavillon 8 du véhicule par une patte coudée 9 disposée à l'autre extrémité 10 de l'écran 2 de telle manière qu'il puisse pivoter autour d'un axe latéral sensiblement vertical et autour d'un axe horizontal coaxial au bras de support 6.

L'écran 2 est réalisé de préférence dans un matériau souple, et il est recouvert par un revêtement 11, qui peut être en matière plastique, du chlorure de polyvinyle, par exemple ou en tissu. L'écran 2 est fabriqué, de manière connue, soit par moulage soit par injection d'une mousse. Il comporte une armature, sous forme d'une tige 12, en matériau flexible, noyée dans la mousse qui présente deux portions d'extrémité de tige, 12a et 12b, s'étendant en vis-à-vis dans l'encoche 5 et coaxialement au bras de support 6. Ce dernier est constitué d'un tube ayant un alésage 13 dont le diamètre est égal au diamètre des portions d'extrémité de tige 12a et 12b et qui débouche sur les deux faces d'extrémité 14a et 14b du bras de support 6. Ces deux faces d'extrémité 14a et 14b présentent des surfaces concaves de manière à pincer les parties 15a et 15b du revêtement 11, qui entourent les portions d'extrémité de tige 12a et 12b, entre les faces d'extrémité 14a et 14b du bras de support 6 et l'écran 2.

Comme on le voit sur le dessin, la longueur de l'une des portions d'extrémité de tige, 12a par exemple, est supérieure à la moitié de la largeur de l'encoche 5. L'autre portion d'extrémité de tige 12b est relativement courte, mais toutefois d'une longueur suffisante pour loger dans l'alésage 13 et retenir une extrémité du bras de support 6.

La tige 12 et l'alésage 13 peuvent avoir des sections circulaires, mais ces sections peuvent également être non circulaires et complémentaires l'une de l'autre pour empêcher la rotation du bras de support 6 sur les portions d'extrémité de tige 12a et 12b. Dans le cas où la tige 12 et l'alésage 13 ont des sections circulaires, il est avantageusement prévu des moyens pour éviter la rotation et le déplacement du bras de support 6. Ces moyens peuvent consister en des bossages ou des méplats, de telle manière que le bras de support 6 s'encliquette sur la tige 12. Ces bossages et ces méplats peuvent être avantageusement obtenus par écrasement de la tige 12.

La fabrication du pare-soleil 1 se fait de la façon décrite ci-dessous :

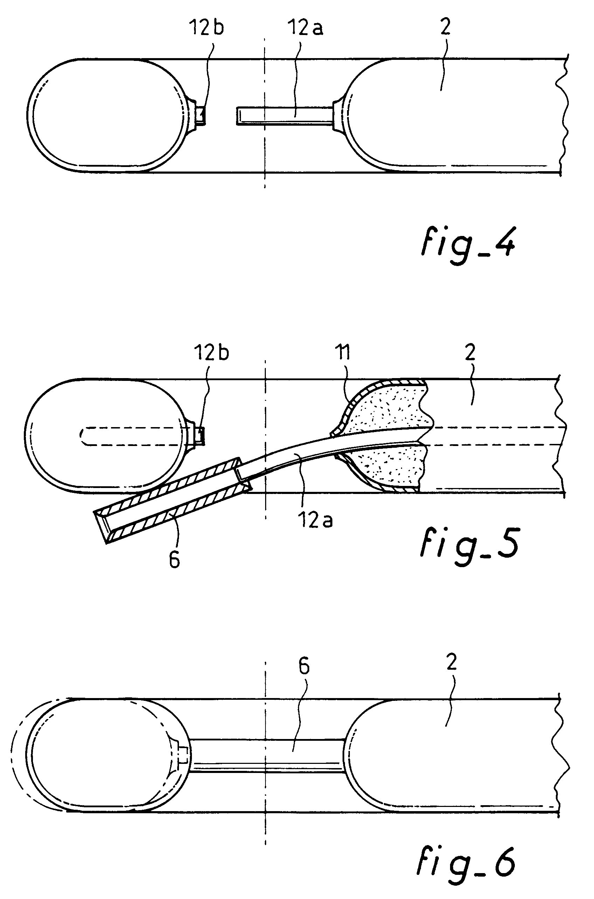

On réalise l'écran 2 en surmoulant la tige 12 par une mousse. On recouvre ensuite l'écran présentant des portions d'extrémité de tige 12a et 12b dans l'encoche 5 par un revêtement 11, en disposant par exemple deux feuilles de PVC de part et d'autre de l'écran 2 que l'on soude le long du pourtour de l'écran 2. On enlève les parties de revêtement qui recouvrent partiellement les portions d'extrémité de tige 12a et 12b. On plie la portion d'extrémité 12a de manière à pouvoir l'enfiler dans l'alésage 13 du bras de support 6, comme on le voit sur la figure 5. Du fait de l'élasticité de la mousse formant l'écran et de l'armature constituée par la tige 12, il suffit d'introduire la portion d'extrémité de tige 12b dans l'alésage 13 par déformation de l'écran 2.

## Revendications

1. Pare-soleil pour véhicule automobile du type comportant un écran (2) présentant une encoche (5) sur l'un de ses bords (3), un bras de support (6) traversant ladite encoche (5) et un revêtement (11) recouvrant ledit écran (2), ledit bras de support (6) étant fixé audit écran par des moyens de fixation et étant destiné à coopérer temporairement avec un moyen d'accrochage fixé au pavillon (8) du véhicule sur lequel ledit parc-soleil est monté, les parties de revêtement (15a, 15b) situées au voisinage immédiat des extrémités du bras support étant interposées entre les faces d'extrémité (14a, 14b) dudit bras de support (6) et ledit écran (2),
caractérisé en ce que ledit écran (2) présente deux portions d'extrémité de tige (12a, 12b) s'étendant en vis-à-vis dans ladite encoche (5) et coaxialement audit bras de support (6),
en ce que ledit bras de support (6) se présente sous la forme d'un tube, et
en ce que les moyens de fixation dudit bras de support (6) sur ledit écran (2) sont constitués par lesdites portions d'extrémité de tige (12a, 12b) coopérant avec des logements (13) ménagés dans ledit bras de support (6) et débouchant sur les faces d'extrémité (14a, 14b) de celui-ci.

2. Pare-soleil selon la revendication 1, caractérisé en ce que la longueur de l'une desdites portions d'extrémité de tige (12a, 12b) est supérieure à la moitié de la largeur de ladite encoche (5).

3. Pare-soleil selon l'une quelconque des revendication 1 et 2, caractérisé en ce que l'une au moins desdites portions d'extrémité de tige (12a) comporte des moyens pour éviter la rotation et le déplacement dudit bras de support (8)

4. Pare-soleil selon la revendication 3, caractérisé en ce que lesdits moyens comportent des bossages et des méplats obtenus par écrasement de la tige (12).

5. Pare-soleil selon l'une quelconque des revendication 1 à 4, caractérisé en ce que les faces d'extrémité (14a, 14b) dudit bras de support (6) présentent des surfaces concaves.

## Claims

1. Sun-visor for motor vehicle of the type comprising a screen (2) having an indentation (5) on one of its edges (3), a supporting arm (6) traversing said indentation (5) and a covering (11) which covers over said screen (2), said supporting arm (6) being fixed to said screen by fixing means and being adapted to cooperate temporarily with a fastening means fixed to the vehicle roof (8) on which said sun-visor is mounted, the parts of the covering (15a, 15b) situated in the immediate vicinity of said end portions of the supporting arm being interposed between the end faces (14a, 14b) of said supporting arm (6) and said screen (2),
characterized in that said screen (2) has two end portions of rod (12a, 12b) extending in opposite directions in said indentation (5) and coaxially to said supporting arm (6),
in that said supporting arm (6) is in the form of a tube, and
in that the means for fixing said supporting arm (6) on said screen (2) are constituted by said end portions of rod (12a, 12b) cooperating with recesses (13) provided in said supporting arm (6) and issuing onto the end faces (14a, 14b) of the latter.

2. Sun-visor according to Claim 1, characterized in that the length of one of said end portions of rod (12a, 12b) is greater than half the width of said indentation (5).

3. Sun-visor according to either one of Claims 1 and 2, characterized in that at least one of said end portions of rod (12a) comprises means for avoiding rotation and shifting of said supporting arm (8).

4. Sun-visor according to Claim 3, characterized in that said means comprise bosses and flat surfaces obtained by crushing of the rod (12).

5. Sun-visor according to any one of Claims 1 to 4, characterized in that the end faces (14a, 14b) of said supporting arm have concave surfaces.

## Patentansprüche

1. Sonnenblende für Kraftfahrzeug, mit einem Schirm (2), der an einem seiner Ränder (3) eine Ausnehmung (5) aufweist, einem die Ausnehmung (5) durchquerenden Haltearm (6) und einer den Schirm (2) bedeckenden Verkleidung (11), wobei der Haltearm (6) am Schirm durch Befestigungsmittel angebracht ist und zum vorübergehenden Zusammenwirken mit einer am Karosserieoberteil (8) des Fahrzeugs, an dem die Sonnenblende montiert ist, befestigten Einhakvorrichtung ausgelegt ist und die Verkleidungsabschnitte (15a, 15b), die den Endstücken des Haltearms unmittelbar benachbart sind, zwischen den Endflächen (14a, 14b) des Haltearms (6) und dem Schirm (2) angeordnet sind,
dadurch **gekennzeichnet,** daß
der Schirm (2) zwei Stangenendabschnitte (12a, 12b) aufweist, die sich in der Ausnehmung (5) einander gegenüber und gleichachsig mit dem Haltearm (6) erstrecken,
der Haltearm (6) die Gestalt eines Rohres hat, und
die Mittel zum Befestigen des Haltearms (6) am Schirm (2) von den Stangenendabschnitten (12a, 12b) gebildet sind, die mit Aufnahmen (13) zusammenwirken, die im Haltearm (6) ausgebildet sind und auf den Endflächen (14a, 14b) desselben münden.

2. Sonnenblende nach Anspruch 1,
dadurch **gekennzeichnet,** daß
die Länge eines der Stangenendabschnitte (12a, 12b) größer als die halbe Breite der Ausnehmung (5) ist.

3. Sonnenblende nach einem der Ansprüche 1 und 2,
dadurch **gekennzeichnet,** daß
wenigstens einer der Stangenendabschnitte (12a) Mittel zum Verhindern der Drehung und der Fortbewegung des Haltearms (6) aufweist.

4. Sonnenblende nach Anspruch 3,
dadurch **gekennzeichnet,** daß
die genannten Mittel Vorsprünge und Anflachungen aufweisen, die durch Stauchen der Stange (12) erzeugt wurden.

5. Sonnenblende nach einem der Ansprüche 1 bis 4,
dadurch **gekennzeichnet,** daß
die Endflächen (14a, 14b) des Haltearms (6) konkave Flächen aufweisen.
